# EUROPEAN PATENT SPECIFICATION

(11) **EP 3 188 934 B1**
(45) Date of publication and mention of the grant of the patent: **24.07.2019**
(21) Application number: 15756915.3
(22) Date of filing: 01.09.2015
(51) Int. Cl.: B60R 21/0136, B60R 21/34

(54) **VEHICLE FRONT END ASSEMBLY**
FAHRZEUGFRONTANORDNUNG
ENSEMBLE TRAIN AVANT DE VÉHICULE

(30) Priority: 02.09.2014 GB 201415507
(43) Date of publication of application: 12.07.2017
(73) Proprietor: Jaguar Land Rover Limited, Coventry, Warwickshire CV3 4LF (GB)
(72) Inventor: MCLUNDIE, William, Coventry Warwickshire CV3 4LF (GB); HARRISON, Phil, Coventry Warwickshire CV3 4LF (GB); BLACKLAW, Roy, Coventry Warwickshire CV3 4LF (GB)
(74) Representative: Holmes, Matthew William
(86) International application number: PCT/EP2015/069895
(87) International publication number: WO 2016/034557

(56) References cited:
- DE-A1- 10 002 110
- US-A- 5 441 301
- US-A1- 2008 122 231

## Description

### TECHNICAL FIELD

The present invention relates to a vehicle front end assembly for sensing the impact of a pedestrian or other object to the front of the vehicle. Aspects of the invention also relate to a pedestrian impact sensing system and to a vehicle having a pedestrian impact sensing system for sensing pedestrian impacts.

### BACKGROUND

In many territories, motor vehicles are required to satisfy pedestrian safety legislation before they are considered fit for road use. One of the developments in pedestrian safety has been the use of devices, such as bonnet airbags, and movable bonnet panels which deploy upon impact with an object, particularly a pedestrian.

When an impact occurs between a pedestrian and a motor vehicle, injury can occur during the collision between the pedestrian's head and the hood or bonnet of the vehicle. Impact protection systems are known in which a bonnet-mounted cushioning device or energy-absorbing bonnet panel is activated in response to the detection of a leg impact. This leg impact is typically detected by a pedestrian sensor integrated into the bumper system. The pedestrian sensor includes a pressure sensitive matrix which runs across the width of the vehicle front and produces a pressure pulse in response to an impact being detected on the front of the vehicle. A signal processor is configured to monitor changes in the measured pressure responses over time and compares the changes with pre-determined data which is characteristic of pedestrian impacts. If a correspondence is identified between the measured changes and the pre-determined data, the system may be configured to activate the cushioning device or to move the bonnet panel into a position better suited to absorbing energy from the impact whilst mitigating pedestrian injury.

Existing pedestrian sensors such as this typically employ a pressure sensing element in the form of a pressure sensitive matrix which is integrated into the front of the vehicle. In many vehicles, the pressure sensitive matrix is sandwiched between a rigid bumper beam of the vehicle and a bumper cover or trim panel, which forms the very front surface of the vehicle. An energy absorbing material, typically foam, is held under compression against the pressure sensitive matrix. The pressure sensitive matrix may be sandwiched between the bumper cover and the bumper foam and the bumper beam rearward of the foam provides a reaction surface for the pressure sensitive matrix.

In the event of an impact to the trim panel at the very front of the vehicle, the force of the impact is transmitted through the foam to the pressure sensitive matrix. Signals generated by the matrix are analysed and used to determine when a pedestrian impact has occurred that warrants activation of the cushioning device or bonnet panel.

The arrangement of the pressure sensitive matrix, the foam, the bumper beam and the bumper cover or trim is straightforward in many vehicles where there is room for the pressure sensitive matrix to run across the full width of the vehicle. However, in more sophisticated and state-of-the-art vehicle configurations, space is more limited and installation of the pressure sensitive matrix in a suitable location, and with a suitable reaction surface along the full length of the matrix, is not so convenient.

US5441301 describes a vehicle and a vehicle crush detecting device and the arrangement of the vehicle crush detecting device within the flat-fronted vehicle, the like of which may be found within the prior art. The vehicle includes an upper radiator support from which a radiator is suspended, rails to which the radiator support is mounted and a bumper structure. The device is mounted to the radiator support, and passes behind the bumper structure across the radiator. In the event of an impact, the bumper structure deforms the device, or the device is deformed if an impact is above or below the area covered by the bumper.

It is one object of the invention to provide an improved vehicle front end assembly for sensing pedestrian impacts which addresses the aformentioned problems.

### SUMMARY OF THE INVENTION

According to one aspect of the present invention, there is provided a front end assembly for a vehicle front end having curved front corners, the assembly comprising a sensing system comprising a sensing element extending laterally across the vehicle front end and compressible against a reaction surface in the event of collision of the vehicle with an impacting object. The sensing element is configured to generate an output signal representative of an impact to the vehicle front end. A bumper assembly comprising a bumper beam extends laterally across the vehicle front end. A further component is located vertically above the bumper beam relative to a vehicle floor, wherein the reaction surface for the sensing element is defined, at least in part, by a surface of the further component. The reaction surface defined by the further component extends laterally outward of the bumper beam.

It is a benefit of this arrangement that the bumper beam can be made relatively short, to fit between curved front corners of the vehicle where a more sophisticated shaping if required, because the further component, which extends outboard (laterally outward) of the bumper rail, is used as the reaction surface for the sensing element.

The further component may take the form of a pedestrian impact beam, located vertically above the bumper beam relative to the vehicle floor. In another embodiment the further component may take the form of a component of a headlamp unit located laterally outward of the bumper beam. In this case the bumper beam also defines a reaction surface for a central portion of the sensing element, with components of the left- and right- side headlamp units defining the reaction surface at left- and right-ends of the sensing element respectively.

The further component may be a further beam extending laterally across the vehicle front end so that a surface of the further beam defines at least a part of the reaction surface for the sensing element.

The assembly may include an energy absorbing module extending laterally across the vehicle front end, configured to absorb energy from the impacting object.

In one embodiment, the further beam forms a part of the energy-absorbing module and may, for example, take the form of a pedestrian impact rail. The energy-absorbing module may include an energy-absorbing material. The sensing element may be located between the energy absorbing material and the further beam.

The sensing element may include a vertical or substantially vertical portion which extends vertically across a portion of the vehicle front end.

The vertical portion may be embedded within the energy absorbing module.

In another embodiment, the further component may be a headlamp of the vehicle so that a surface of the headlamp defines at least a part of the reaction surface for the sensing element.

A portion of the sensing element which extends laterally inward of the further component may be located between the energy absorbing module and the bumper beam. As before, the energy absorbing module may include an energy absorbing material.

The energy absorbing material may comprise a foam element.

According to another aspect, a pedestrian impact sensing system for a vehicle comprises the front end assembly of the previous aspect and a control system for controlling an actuable device in response to the output signal from the sensing element.

In one embodiment the actuable device may be a movable element of a bonnet of the vehicle.

For example, the actuable device may be a cushioning device.

According to another aspect, there is provided a vehicle comprising a pedestrian impact sensing system of the previous aspect of the invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner

### BRIEF DESCRIPTION OF THE DRAWINGS

One or more embodiments of the invention will now be described, by way of example only, with reference to the accompanying drawings, in which:
Figure 1 is a front view of a vehicle having a front end assembly of a first embodiment of the invention;
Figure 2 is a side-view, along line A-A, of the front end assembly in Figure 1;
Figure 3 is a perspective view of the front end assembly in Figures 1 and 2, to highlight an energy absorbing material of the assembly;
Figure 4 is a perspective view of the front end assembly in Figure 3, with the energy absorbing element removed to reveal a sensing element of the assembly;
Figure 5 is a front view of a front end assembly of another embodiment of the invention;
Figure 6 is an overhead plan view of the front end assembly of Figure 5;
Figure 7 is a side-view, along line A-A, of the front end assembly in Figure 5;
Figure 8 is a side-view, along line B-B, of the front end assembly in Figure 5; and
Figure 9 is a perspective view of a section of the front end assembly in Figures 5 to 8.

### DETAILED DESCRIPTION

Reference(s) to "embodiment(s)" throughout the description which are not under the scope of the appended claims merely represent possible exemplary executions and are therefore not part of the present invention.

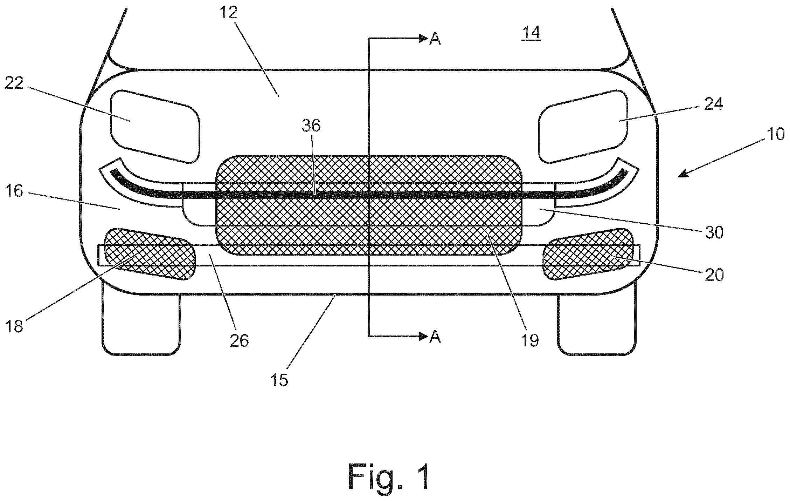

It will be appreciated that references to left and right, upper and lower, and rearward and forward in the following description are not to be taken as limiting and are simply made with reference to the orientation of the parts as shown in the figures.
Referring to Figure 1, a front end assembly 10 of a motor vehicle includes a forward-facing front panel 12, an upper vehicle bonnet or hood 14 (hereafter referred to as the bonnet) and a vehicle floor 15. The bonnet 14 may include a movable panel (not shown) which is activated in the event of an impact to the front end of the vehicle. In an alternative arrangement, or in addition, a cushioning device, such as a bonnet airbag, may be provided for activation in such circumstances.

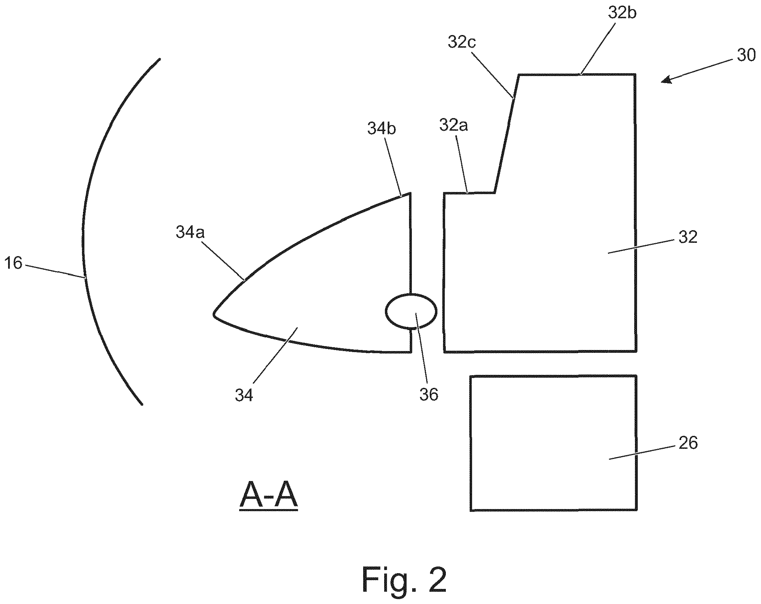

Referring also to Figure 2, the front end assembly 10 further includes a bumper cover 16 which forms an aesthetically pleasing skin at the front of the vehicle. An elongate central grill 19 is provided in the bumper cover 16 to allow air intake into an engine compartment housed beneath the bonnet 14. Further left- and right-side lower grills, 18, 20 respectively, are provided in the bumper cover, one on each side of the vehicle, for additional cooling requirements such as cooling an intercooler and for brake cooling.

The front end assembly 10 further includes left- and right-side headlamp units 22, 24, each of which is located generally vertically above the left-and right-side lower grills 18, 20 respectively. A bumper beam 26 extends laterally across the vehicle and sits immediately behind the left- and right-side grills 18, 20.

An energy absorbing module 30 is located vertically above the bumper beam 26, relative to the vehicle floor 15, and includes a pedestrian impact beam or rail 32 which extends laterally across the vehicle immediately behind the central grill 18. The energy absorbing module 30 also includes an elongate energy-absorbing foam element 34. The pedestrian impact beam 32 and the energy-absorbing foam element 34 are positioned so as to absorb energy from an impact with a pedestrian at the front of the vehicle.

A sensing system is also included in the front end assembly, including an elongate sensing element 36 which extends laterally across the vehicle behind the bumper cover 16. As can be seen in Figure 2, the sensing element 36 is sandwiched between the foam element 34 and the pedestrian impact rail 32.

A particular feature of the vehicle front end assembly in Figure 1 is that it is curved in the front corner regions on the left- and right-hand sides, so that left- and right-side flanks of the vehicle curve inwardly at their front ends to meet rearwardly curved left-and right- sides of the vehicle front. The curvature in the vehicle front corners means that the headlamp units 22, 24, the grills 18, 20 and the left- and right- ends of the pedestrian impact rail 32 all curve rearwards at their extremities, away from the central grill 19. This provides an aesthetically pleasing and sophisticated appearance to the front of the vehicle, but it does mean that the bumper rail 26 is shorter than in a more "flat-fronted" vehicle. In plan view (not shown) the head lamp units 22, 24 sit rearward of the bumper beam 26 due to the degree of curvature to the front end.

Referring again to Figure 2 in particular, which shows a side view of the front end assembly, the sensing element 36 is located vertically above the bumper beam 26, relative to the vehicle floor 15, and is sandwiched between the energy-absorbing foam element 34 and the pedestrian impact rail 32. The energy-absorbing element 34 is of generally triangular cross-section having a nose portion 34a facing forwards on the vehicle and a generally flat-surfaced rear portion 34b facing rearwards. The cross-section may be of different form than generally triangular to suit the desired absorption impact. The energy-absorbing element 34 may be formed from a material such as EPP (Expanded Polypropylene) or any other suitable material. The pedestrian impact rail 32 includes a front-facing portion 32a of a first height and a rear-facing portion 32b having a greater height, with a sloping forward facing surface 32c connecting the two portions 32a, 32b. It can be seen clearly in Figure 2 that the pedestrian impact rail 32 is located almost directly vertically above the bumper beam 26.

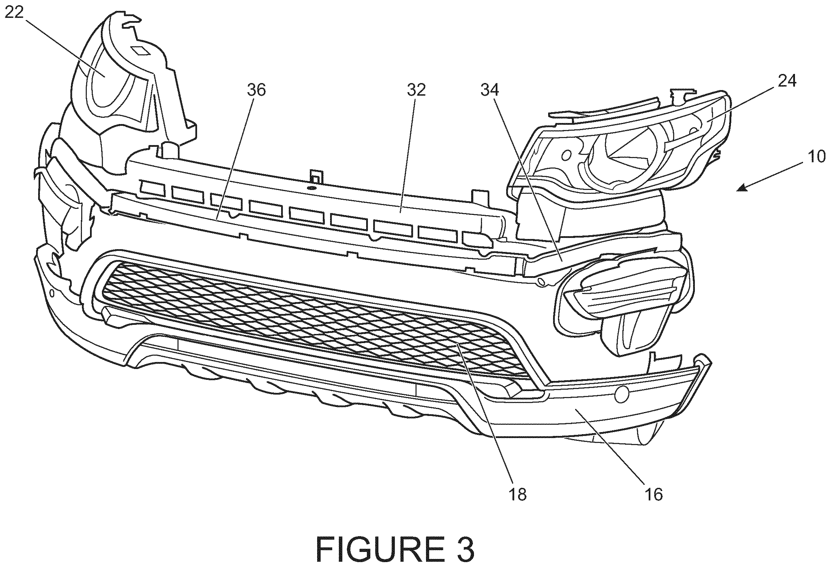

Figure 3 shows the front end assembly in Figures 1 and 2 with an upper region of the bumper cover 16 removed, so that the energy-absorbing foam element 34 of the energy absorbing module 30 is visible from the front of the vehicle. The left- and right-side ends of the energy-absorbing foam element 34 extend rearward, in a curved manner, away from the vehicle front, and approximately follow the curvature of the pedestrian impact rail 32 as it curves rearwards on the left- and right-sides of the vehicle.

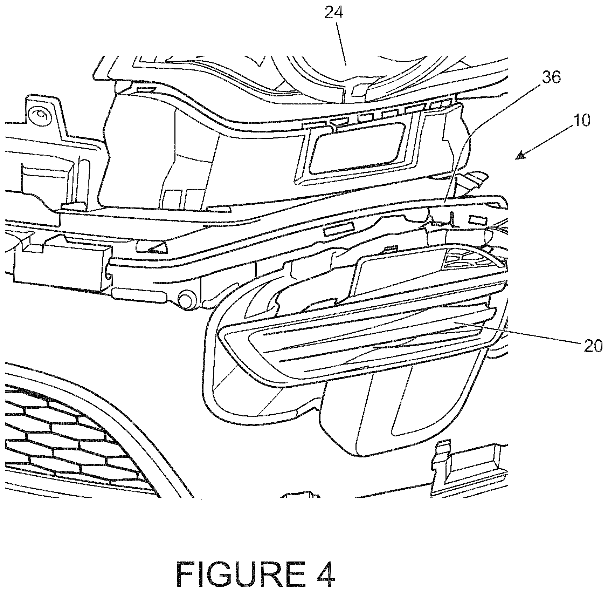

Figure 4 shows an enlarged view of the right-hand side of the front end assembly 10, with the bumper cover 26 and the energy absorbing foam 34 removed, to show the curvature of the sensing element 36 in more detail. It can be seen here that the sensing element 36 is positioned immediately above the right-side grill 20 and immediately below the right-side headlamp unit 24.

The sensing element 36 takes the form of a pressure sensitive matrix which generates pressure patterns depending on the extent to which the element is compressed. The energy absorbing foam element 34 is held in compression against the sensing element 36 so that the force due to an impact of an object (such as a pedestrian) at the front of the vehicle is transmitted through the foam 34, which absorbs some of the energy of the impact, to the sensing element 36. The sensing element 36 is then compressed against the pedestrian impact rail 32, which sits immediately behind the sensing element 36. Pressure pulses are generated as a result of the sensing element 36 being 'squeezed' between the foam 34 and the pedestrian impact rail 32. The pressure pulses are used to construct a pressure pattern along the length of the sensing element 36 which can be compared with prestored data patterns to identify when an impacting object of significant form, for example a pedestrian or an animal, has impacted the front of the vehicle. By way of example, the sensing element 36 may include force-sensitive resistors, capacitive arrays, strain gauges and piezo-electric or capacitive load cells.

It is an important feature of the front end assembly in Figure 1 that the bumper beam 26 is located lower on the vehicle than the energy-absorbing module 30, including the sensing element 36. By using the pedestrian impact rail 32 to define a reaction surface for the sensing element 36 (i.e. a component other than the bumper beam 26), all components can be accommodated within the front end assembly 10, even in a vehicle with a high degree of curvature to the left- and right-side corners where the bumper beam 26 is relatively short.

The response of the sensing element 36 can be tuned depending on the extent to which the element is buried within the foam element 34. For example, oblique impacts result in smaller signals than head on impacts of equivalent force. So, for example, if the sensing element 36 protrudes equidistant from the foam element 34 at left- and right-side corners, as it does at a more central region, the sensing element 36 at the left- and right-side corners would measure a lower signal to that at the central region for an impact of equivalent force. In order to tune the response to provide a continuous signal, the sensing element 36 must protrude further out of the foam element 34 at the left- and right-hand corners compared to the central region.

In the event of an impact to the front of the vehicle by a pedestrian, the sensing element 36 becomes compressed or squeezed against the reaction surface defined by the pedestrian impact rail 32 and a pressure pattern is output from the sensing element 36 as described above. An on-board vehicle computer (not shown) is provided with a data memory for storing pre-calibrated pressure pattern data. The output from the sensing element 36 is compared with the pre-calibrated data to determine when an impacting object takes the form of a pedestrian. In this event, the computer outputs a control signal to activate the cushioning device on the bonnet or the movable hood panel, depending on the particular configuration in the vehicle.

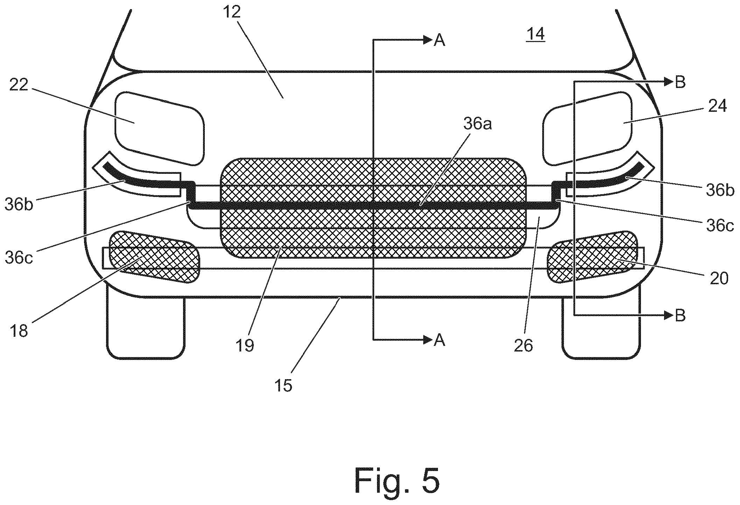

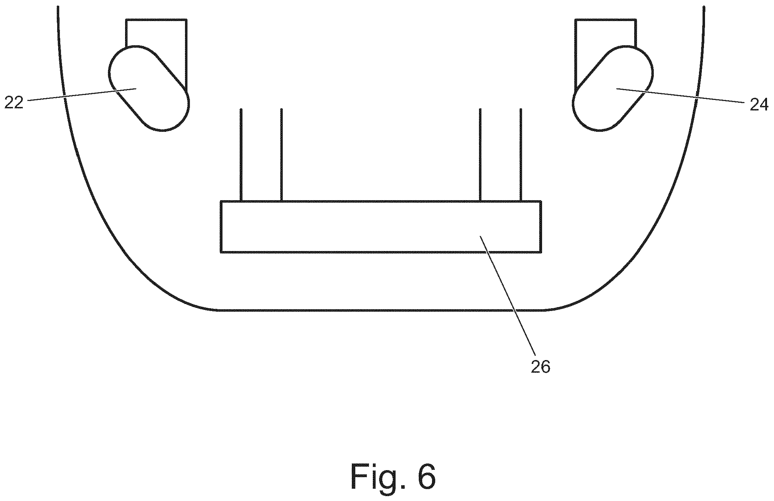

Figures 5 and 6 shows an alternative embodiment of the invention for use in a vehicle which also has curved regions at the front left- and right-sides of the vehicle. Like parts to those shown in Figures 1 to 5 are identified with like reference numerals so that the vehicle has a central grill 19, left- and right-side lower grills 18, 20 and left- and right-side headlamp units 20, 24. As for the previous embodiment, left- and right-side flanks of the vehicle curve inwardly at their front ends to meet rearwardly curved left- and right-sides of the vehicle front to provide the vehicle with a particularly pleasing aesthetic appearance. Figure 6 is a plan view, from overhead, of the front end assembly to illustrate the degree of curvature in greater detail. It can be seen from Figure 6 that the head lamp units 22, 24 sit rearward of the bumper beam 26, one on each side of the vehicle.

The sensing element 36 is of elongate form, as in the previous embodiment, and includes a central portion 36a which extends laterally across the vehicle, immediately behind the central grill 19. The central portion 36a of the sensing element 36 projects beyond the central grill 19 at the sides and left- and right-side vertical portions 36c extend vertically upwards. Left- and right-side end portions 36b of the sensing element 36 extend laterally from the upper end of the respective vertical portion 36c, one on each side of the vehicle, and curve rearwardly to follow the curvature of the vehicle front.

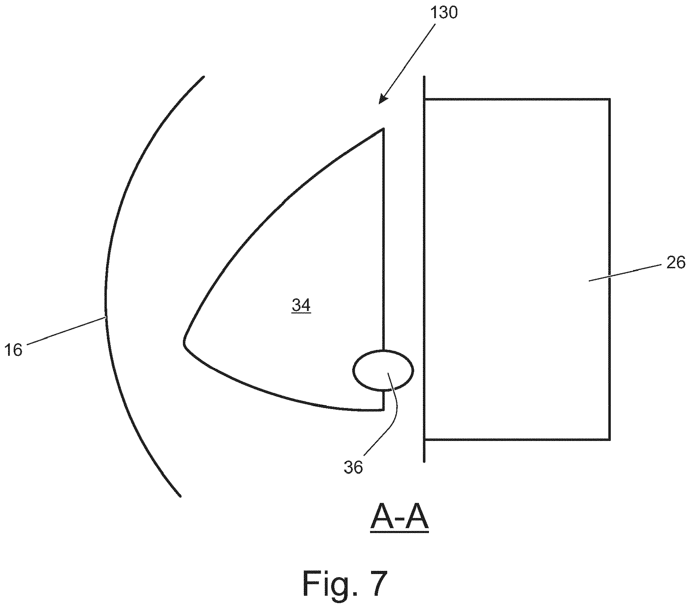

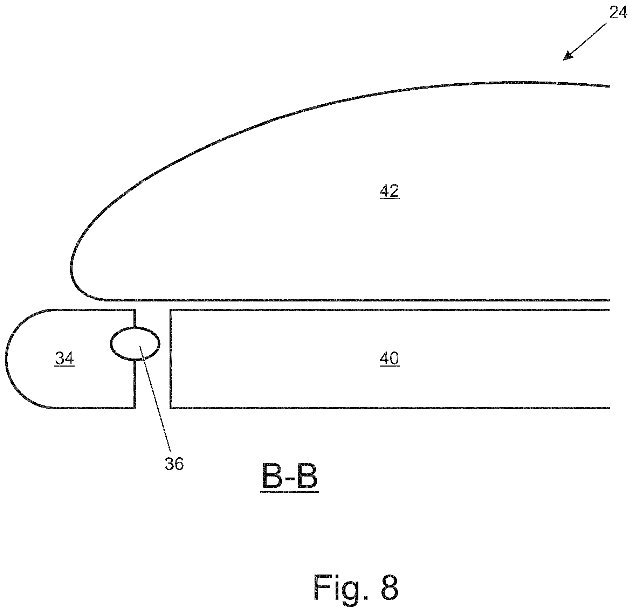

Referring also to Figures 7 and 8, the energy absorbing module 130 includes an energy absorbing material such as EPP foam, as described previously.

Figure 7 shows a cross-section of the front end assembly through line A-A in Figure 5, which is the central portion of the front end assembly, and Figure 8 shows a cross-section of the front end assembly through line B-B, which is an outer region of the front end assembly. In the central portion of the assembly, as shown in Figure 7, the sensing element 36 is sandwiched between the energy-absorbing foam 34 and the bumper beam 26 which sits immediately behind the foam 34. However, at the ends of the sensing element 36, as shown in Figure 8, the sensing element 36 is sandwiched between the energy-absorbing foam 34 and a body 40 of the headlamp unit 24. The energy-absorbing foam 34 therefore extends laterally across the vehicle, at a first height (immediately in front of the bumper beam 26) in the central region and then at a second, higher height (immediately in front of the headlamp unit 24) at the end regions.

A lens cover 42 of the headlamp unit 24, typically made from a polycarbonate material, sits immediately above the headlamp body 40. In this arrangement, the outer ends 36b of the sensing element 36 cooperate with the headlamp body 40 during an impact so that the body 40 defines a reaction surface for the sensing element 36. It will therefore be appreciated that, in this arrangement, both the bumper beam 26 and the headlamp body 40 define the reaction surface for the sensing element 36 to enable the pressure pattern to be generated across the full width of the vehicle during an impact with the vehicle front end.

The vertical portions 36c of the sensing element 36 are embedded within the foam 34, rather than having a reaction surface behind them. This is because any impact to the vertical region of the foam 34 would give rise to an excessive signal, due to the impact with a pedestrian leg for example, which could lead to erroneous pressure patterns being detected. By removing the vertical portion of the sensing element 36 from the pressure sensitive matrix, inadvertent activation of the movable bonnet panel or the cushioning device is avoided. In this way, the sensing performance across the width of the vehicle is continuous. As with the previous embodiment, if the sensing element 36 protrudes equidistant from the foam 34 at the outer ends 36c, as it does at the inner portion 36a, the outer ends 36c measure a lower signal to that measured at the central portion 36a for an impact of equivalent force. In order to tune the response to provide a continuous signal, the sensing element 36 is arranged to protrude further out of the foam 34 at the outer ends 36c compared to the inner portion 36a.

The pedestrian impact identification occurs as for the previous embodiment by comparing the output signal from the sensing system with pre-calibrated pressure pattern data stored on the vehicle computer.

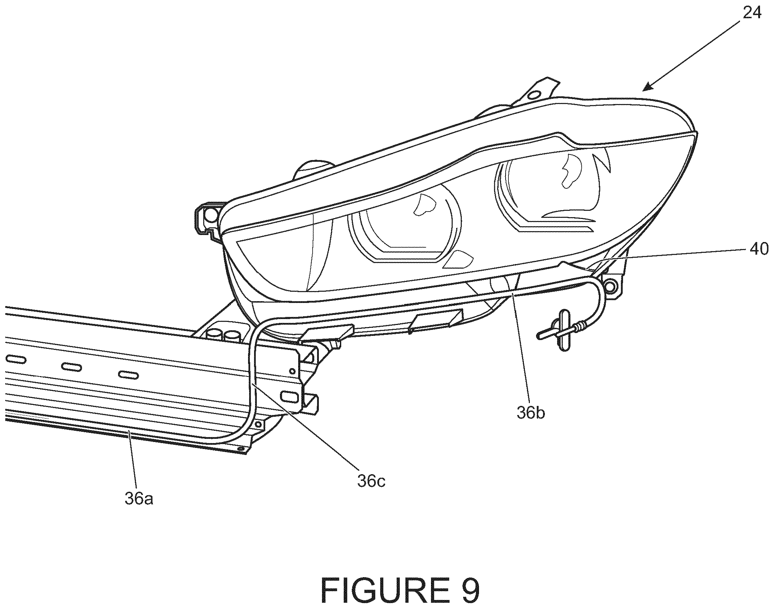

Figure 9 is a perspective view of a section of the embodiment in Figures 5 to 8 to show the routing of the sensing element 36 across the bumper beam 26, vertically upwards in the vertical portions 36c and then laterally (at 36b) across the head lamp body 40.

## Claims

1. A front end assembly (10) for a vehicle front end having curved front corners, the front end assembly (10) comprising:
a sensing system comprising a sensing element (36) extending laterally across the vehicle front end and compressible against a reaction surface (32) in the event of collision of the vehicle with an impacting object, the sensing element (36) configured to generate an output signal representative of an impact to the vehicle front end;
a bumper assembly comprising a bumper beam (26) extending laterally across the vehicle front end; and
a further component located vertically above the bumper beam (26) relative to a vehicle floor (15);
wherein the reaction surface for the sensing element (36) is defined, at least in part, by a surface of the further component (32); **characterised in that**:
the reaction surface defined by the surface of the further component (32) extends laterally outward of the bumper beam (26).

2. The front end assembly (10) as claimed in claim 1, wherein the further component is a further beam extending laterally across the vehicle front end so that a surface of the further beam defines at least a part of the reaction surface for the sensing element (36).

3. The front end assembly (10) as claimed in claim 2, comprising an energy absorbing module (30) extending laterally across the vehicle front end, configured to absorb energy from the impacting object.

4. The front end assembly (10) as claimed in claim 3, wherein the further beam forms a part of the energy-absorbing module (30).

5. The front end assembly (10) as claimed in claim 4, wherein the further beam is a pedestrian impact rail (32).

6. The front end assembly (10) as claimed in claim 4 or claim 5, wherein the energy-absorbing module (30) includes an energy-absorbing material (34) and wherein the sensing element (36) is located between the energy absorbing material (34) and the further beam.

7. The front end assembly (10) as claimed in claim 1, wherein the further component is a headlamp (20, 24) of the vehicle so that a surface of the headlamp (20, 24) defines at least a part of the reaction surface for the sensing element (36).

8. The front end assembly (10) as claimed in claim 1 or claim 7, comprising an energy absorbing module (30) extending laterally across the vehicle front end, configured to absorb energy from the impacting object.

9. The front end assembly (10) as claimed in claim 8, wherein a portion of the sensing element (36) which extends laterally inward of the further component is located between the energy absorbing module (30) and the bumper beam (26).

10. The front end assembly (10) as claimed in claim 8 or 9, wherein the energy absorbing module (30) includes an energy absorbing material (34).

11. The front end assembly (10) as claimed in any preceding claim, wherein the sensing element (36) includes a vertical portion which extends vertically across a portion of the vehicle front end.

12. The front end assembly (10) as claimed in claim 11 when depending through any of claims 8 to 10, wherein the vertical portion (36c) is embedded within the energy absorbing module (30).

13. A pedestrian impact sensing system for a vehicle comprising the front end assembly (10) as claimed in any preceding claim and a control system for controlling an actuable device in response to the output signal from the sensing element (36).

14. A pedestrian impact sensing system as claimed in claim 13, wherein the actuable device is a movable element of a bonnet (14) of the vehicle or wherein the actuable device is a cushioning device.

15. A vehicle comprising a pedestrian impact sensing system as claimed in claim 14.

## Patentansprüche

1. Vorbauanordnung (10) für einen Fahrzeugvorbau mit gekrümmten vorderen Ecken, wobei die Vorbauanordnung (10) Folgendes umfasst:
ein Erfassungssystem, umfassend ein Erfassungselement (36), das sich seitlich über den Fahrzeugvorbau erstreckt und in dem Fall einer Kollision des Fahrzeugs mit einem aufprallenden Objekt gegen eine Reaktionsoberfläche (32) komprimierbar ist, wobei das Erfassungselement (36) konfiguriert ist, um ein Ausgangssignal zu erzeugen, das einen Aufprall auf den Fahrzeugvorbau darstellt;
eine Stoßstangenanordnung, umfassend einen Stoßstangenträger (26), der sich seitlich über den Fahrzeugvorbau erstreckt; und
eine weitere Komponente, die sich vertikal über dem Stoßstangenträger (26) in Bezug auf einen Fahrzeugboden (15) befindet;
wobei die Reaktionsoberfläche für das Erfassungselement (36) wenigstens zum Teil durch eine Oberfläche der weiteren Komponente (32) definiert ist; **dadurch gekennzeichnet, dass**:
sich die durch die Oberfläche der weiteren Komponente (32) definierte Reaktionsoberfläche seitlich aus dem Stoßstangenträger (26) heraus erstreckt.

2. Vorbauanordnung (10) nach Anspruch 1, wobei die weitere Komponente ein weiterer Träger ist, der sich seitlich über den Fahrzeugvorbau erstreckt, sodass eine Oberfläche des weiteren Trägers wenigstens einen Teil der Reaktionsoberfläche für das Erfassungselement (36) definiert.

3. Vorbauanordnung (10) nach Anspruch 2, umfassend ein energieabsorbierendes Modul (30), das sich seitlich über den Fahrzeugvorbau erstreckt, konfiguriert, um Energie von dem aufprallenden Objekt zu absorbieren.

4. Vorbauanordnung (10) nach Anspruch 3, wobei der weitere Träger einen Teil des energieabsorbierenden Moduls (30) ausbildet.

5. Vorbauanordnung (10) nach Anspruch 4, wobei der weitere Träger eine Fußgängeraufprallschiene (32) ist.

6. Vorbauanordnung (10) nach Anspruch 4 oder 5, wobei das energieabsorbierende Modul (30) ein energieabsorbierendes Material (34) einschließt und wobei sich das Erfassungselement (36) zwischen dem energieabsorbierenden Material (34) und dem weiteren Träger befindet.

7. Vorbauanordnung (10) nach Anspruch 1, wobei die weitere Komponente ein Scheinwerfer (20, 24) des Fahrzeugs ist, sodass eine Oberfläche des Scheinwerfers (20, 24) wenigstens einen Teil der Reaktionsoberfläche für das Erfassungselement (36) definiert.

8. Vorbauanordnung (10) nach Anspruch 1 oder 7, umfassend ein energieabsorbierendes Modul (30), das sich seitlich über den Fahrzeugvorbau erstreckt, konfiguriert, um Energie von dem aufprallenden Objekt zu absorbieren.

9. Vorbauanordnung (10) nach Anspruch 8, wobei sich ein Abschnitt des Erfassungselements (36), der sich seitlich von der weiteren Komponente nach innen erstreckt, zwischen dem energieabsorbierenden Modul (30) und dem Stoßstangenträger (26) befindet.

10. Vorbauanordnung (10) nach Anspruch 8 oder 9, wobei das energieabsorbierende Modul (30) ein energieabsorbierendes Material (34) einschließt.

11. Vorbauanordnung (10) nach einem der vorhergehenden Ansprüche, wobei das Erfassungselement (36) einen vertikalen Abschnitt einschließt, der sich vertikal über einen Abschnitt des Fahrzeugvorbaus erstreckt.

12. Vorbauanordnung (10) nach Anspruch 11, wenn von einem der Ansprüche 8 bis 10 abhängig, wobei der vertikale Abschnitt (36c) innerhalb des energieabsorbierenden Moduls (30) eingebettet ist.

13. Fußgängeraufprallerfassungssystem für ein Fahrzeug, umfassend die Vorbauanordnung (10) nach einem der vorhergehenden Ansprüche und ein Steuersystem zum Steuern einer betätigbaren Vorrichtung als Reaktion auf das Ausgangssignal von dem Erfassungselement (36).

14. Fußgängeraufprallerfassungssystem nach Anspruch 13, wobei die betätigbare Vorrichtung ein bewegliches Element einer Motorhaube (14) des Fahrzeugs ist oder wobei die betätigbare Vorrichtung eine Dämpfvorrichtung ist.

15. Fahrzeug, umfassend ein Fußgängeraufprallerfassungssystem nach Anspruch 14.

## Revendications

1. Ensemble d'extrémité avant (10) pour une extrémité avant de véhicule ayant des coins avant incurvés, l'ensemble d'extrémité avant (10) comprenant :
un système de détection comprenant un élément de détection (36) s'étendant latéralement sur l'extrémité avant du véhicule et compressible contre une surface de réaction (32) en cas de collision du véhicule avec un objet percutant, l'élément de détection (36) étant configuré pour générer un signal de sortie représentatif d'une percussion sur l'avant du véhicule ;
un ensemble pare-chocs comprenant une poutre de pare-chocs (26) s'étendant latéralement sur l'extrémité avant du véhicule ; et
un composant supplémentaire situé verticalement au-dessus de la poutre de pare-chocs (26) par rapport au plancher du véhicule (15) ;
dans lequel la surface de réaction pour l'élément de détection (36) est définie, au moins en partie, par une surface du composant supplémentaire (32) ; **caractérisé en ce que** :
la surface de réaction définie par la surface du composant supplémentaire (32) s'étend latéralement vers l'extérieur de la poutre de pare-chocs (26).

2. Ensemble d'extrémité avant (10) selon la revendication 1, dans lequel le composant supplémentaire est une poutre supplémentaire s'étendant latéralement sur l'extrémité avant du véhicule de telle sorte qu'une surface de la poutre supplémentaire définit au moins une partie de la surface de réaction pour l'élément de détection (36).

3. Ensemble d'extrémité avant (10) selon la revendication 2, comprenant un module absorbant l'énergie (30) s'étendant latéralement sur l'extrémité avant du véhicule, configuré pour absorber l'énergie provenant de l'objet percutant.

4. Ensemble d'extrémité avant (10) selon la revendication 3, dans lequel la poutre supplémentaire fait partie du module absorbant l'énergie (30).

5. Ensemble d'extrémité avant (10) selon la revendication 4, dans lequel la poutre supplémentaire est un rail de percussion de piéton (32).

6. Ensemble d'extrémité avant (10) selon la revendication 4 ou la revendication 5, dans lequel le module absorbant l'énergie (30) comprend un matériau absorbant l'énergie (34) et dans lequel l'élément de détection (36) est situé entre le matériau absorbant l'énergie (34) et la poutre supplémentaire.

7. Ensemble d'extrémité avant (10) selon la revendication 1, dans lequel le composant supplémentaire est un phare (20, 24) du véhicule de sorte qu'une surface du phare (20, 24) définit au moins une partie de la surface de réaction pour l'élément de détection (36).

8. Ensemble d'extrémité avant (10) selon la revendication 1 ou la revendication 7, comprenant un module absorbant l'énergie (30) s'étendant latéralement sur l'extrémité avant du véhicule, configuré pour absorber l'énergie provenant de l'objet percutant.

9. Ensemble d'extrémité avant (10) selon la revendication 8, dans lequel une portion de l'élément de détection (36) qui s'étend latéralement vers l'intérieur du composant supplémentaire est située entre le module absorbant l'énergie (30) et la poutre de pare-chocs (26).

10. Ensemble d'extrémité avant (10) selon la revendication 8 ou 9, dans lequel le module absorbant l'énergie (30) comprend un matériau absorbant l'énergie (34).

11. Ensemble d'extrémité avant (10) selon l'une quelconque des revendications précédentes, dans lequel l'élément de détection (36) comprend une portion verticale qui s'étend verticalement sur une portion de l'extrémité avant du véhicule.

12. Ensemble d'extrémité avant (10) selon la revendication 11 lorsqu'elle dépend de l'une quelconque des revendications 8 à 10, dans lequel la portion verticale (36c) est noyée dans le module absorbant l'énergie (30).

13. Système de détection de percussion de piéton pour un véhicule comprenant l'ensemble d'extrémité avant (10) selon l'une quelconque des revendications précédentes et un système de commande pour commander un dispositif pouvant être actionné en réponse au signal de sortie provenant de l'élément de détection (36).

14. Système de détection de percussion de piéton selon la revendication 13, dans lequel le dispositif pouvant être actionné est un élément mobile d'un capot (14) du véhicule ou dans lequel le dispositif pouvant être actionné est un dispositif d'amortissement.

15. Véhicule comprenant un système de détection de percussion de piéton selon la revendication 14.
